# EUROPEAN PATENT APPLICATION

(11) **EP 4 817 485 A1**
(43) Date of publication of application: **07.10.2026**
(21) Application number: 26166981.6
(22) Date of filing: 24.03.2026
(51) Int. Cl.: A47L 9/00, A47L 11/10, A47L 11/20, A47L 11/40

(54) **ROBOT CLEANER AND ROBOT CLEANER SYSTEM**

(30) Priority: 01.04.2025 KR 20250041943
(71) Applicant: LG Electronics Inc., Yeongdeungpo-gu Seoul 07336 (KR)
(72) Inventor: YANG, Ingyu, Seoul (KR); RYU, Jungwan, Seoul (KR); KIM, Sungjun, Seoul (KR)
(74) Representative: Vossius & Partner Patentanwälte Rechtsanwälte mbB

(57) **Abstract**

The present disclosure relates to a robot cleaner (200) including a body (210) having a pair of wheels (260) on a bottom surface thereof, a suction unit (211) disposed between the pair of wheels (260), an auxiliary wheel (270) disposed on one side of the suction unit (211), a caster (250) disposed opposite the auxiliary wheel (270) with respect to the suction unit (211), and a rotary cleaning unit (240) to which one or more mops (242) are coupled and whose rotation center is disposed between the caster and the suction unit, such that the mop does not contact an inclined surface when the robot cleaner is climbing the inclined surface, thereby preventing contamination of the inclined surface and enabling the the robot cleaner to smoothly climb the inclined surface.

## Description

This application claims priority to and the benefit of Korean Patent Application No. 10-2025-0041943, filed on 2025.04.01, the disclosure of which is incorporated herein by reference in its entirety.

### BACKGROUND

### [Technical Field]

Embodiments of the present disclosure relate to a robot cleaner, and more particularly, to a robot cleaner having a caster such that a mop is not in contact with an inclined surface when the robot cleaner climbs the inclined surface.

### [Background Art]

A cleaner is a device that performs cleaning by sucking or wiping dust or foreign substances in a target area to be cleaned.

Such cleaners may be classified into a manual cleaner for a user to directly move the cleaner to perform cleaning, and an automatic cleaner that performs cleaning while traveling by itself.

Here, the robot cleaner sucks foreign substances such as dust from a floor while traveling by itself within an area to be cleaned. In addition, the robot cleaner may be controlled to clean while automatically traveling in the cleaning area using an obstacle sensor or other sensors provided therein, or to clean while manually traveling using a remote controller wirelessly connected to the robot cleaner.

In a conventional robot cleaner, a mop of the robot cleaner becomes soiled after the robot cleaner is docked at a robot cleaner station after completing cleaning. Since the mop of the robot cleaner has completed cleaning of a designated area, the mop is in a contaminated state.

In order for the contaminated mop as described above to be docked at the robot cleaner station, it must move on an inclined surface. However, when climbing the inclined surface, the contaminated mop comes into contact with the inclined surface of the robot cleaner station, thereby contaminating the inclined surface and causing a problem of generating an odor.

In addition, a mop containing moisture tends to sag downward, and thus, when the robot cleaner climbs the inclined surface, the mop and the inclined surface rub against each other, causing a problem that the robot cleaner cannot smoothly climb the inclined surface.

Meanwhile, Chinese Patent Application Publication No. CN 115670313 A discloses a robot cleaner station including a base body and a ramp that enables movement to the base body, and a robot cleaner that moves the ramp so that the robot cleaner moves up to the base body.

However, in the robot cleaner described above, the ramp moves while the mop and the ramp are in contact with each other to move the robot cleaner to the base body. This may cause contamination of the ramp and an odor as the ramp comes into contact with the mop.

### SUMMARY

Accordingly, the present disclosure has been created to improve the problems of the conventional robot cleaner as described above, and one object of the present disclosure is to provide a robot cleaner having a caster such that a mop is not in contact with an inclined surface.

In addition, as the mop is not in contact with the inclined surface, another object of the present disclosure is to provide a robot cleaner that prevents contamination of the inclined surface to prevent generation of odors and propagation of bacteria, and enables the robot cleaner to smoothly climb the inclined surface.

In addition, another object of the present disclosure is to provide a robot cleaner system that includes a caster entrance ramp in a robot cleaner station to guide the robot cleaner to be docked at an accurate position when the robot cleaner is docked at the robot cleaner station.

In order to achieve the above objects, a robot cleaner according to the present disclosure may include: a body provided with a pair of wheels on a bottom surface portion thereof; and a suction unit disposed between the pair of wheels.

The robot cleaner may further include: an auxiliary wheel disposed on one side of the suction unit; a caster disposed in a direction opposite to a direction in which the auxiliary wheel is disposed in the suction unit; and a rotary cleaning unit to which at least one or more mops are coupled, wherein a rotation center of the rotary cleaning unit is disposed between the caster and the suction unit.

When the pair of wheels climb an inclined surface in a direction toward the caster, rolling directions of the caster and the auxiliary wheel may be located on a straight line.

The caster may prevent the mop from contacting the inclined surface when the pair of wheels climb the inclined surface in the direction toward the caster.

In addition, the caster may be located closer to a ground than the mop when the pair of wheels climb the inclined surface in the direction toward the caster.

The rotary cleaning unit includes a driving unit configured to move the mop up and down, and the driving unit may lift the mop to be spaced apart from the ground when the pair of wheels move in the direction toward the caster toward the inclined surface.

An angle formed between the ground and a virtual line contacting an outer peripheral surface of the wheel and an outer peripheral surface of the caster from a lower side may be formed to be equal to an angle formed between the ground and the inclined surface or smaller than the angle formed between the ground and the inclined surface.

The rotary cleaning unit includes a shaft configured to rotate the mop, and the shaft may be located above a virtual line contacting the outer peripheral surface of the wheel and the outer peripheral surface of the caster from the lower side.

The caster may be spaced apart from the inclined surface when the wheel contacts the inclined surface.

The driving unit may lift the mop such that an angle formed between the ground and a virtual line passing through a point located at the rearmost side of the mop and contacting the outer peripheral surface of the caster is smaller than an angle formed by the inclined surface with the ground.

The caster may be formed to be spaced apart from the ground in a state where the pair of wheels are in contact with the ground.

The caster includes a caster wheel and a lifter configured to move the caster wheel in an up-down direction.

At this time, during traveling on the inclined surface, an angle formed between the ground and a virtual line contacting the outer peripheral surface of the caster at a point located at the rearmost side of the bottom surface portion of the body may be formed to be larger than an angle formed between the inclined surface and the ground.

In order to achieve the above objects, the robot cleaner of a robot cleaner system according to the present disclosure may include: a body provided with a wheel on a bottom surface portion thereof; at least one or more rotary cleaning units disposed at a lower side of the body, to which a mop is capable of being coupled; and a caster disposed at the lower side of the body and disposed rearward of the rotary cleaning unit.

The robot cleaner station may include: a seating unit in which the robot cleaner is accommodated; and a door unit configured to open and close an entrance through which the robot cleaner enters and exits the seating unit.

The door unit includes an inclined surface on which the robot cleaner climbs when the entrance is opened, and the caster may assist the mop not to contact the inclined surface when climbing the inclined surface.

The robot cleaner station may further include a caster entrance ramp formed to be recessed in the inclined surface and configured to guide movement of the caster.

The robot cleaner station includes a docking wall electrically and fluidly connected to the robot cleaner, and the docking wall may include a caster groove in which the caster is seated.

At this time, an angle formed between the ground and a virtual line contacting the outer peripheral surface of the wheel and the outer peripheral surface of the caster from the lower side may be formed to be equal to an angle formed between the ground and the inclined surface or smaller than the angle formed between the ground and the inclined surface.

As described above, according to the robot cleaner and the robot cleaner system of the present disclosure, a caster is provided such that a mop may be prevented from contacting an inclined surface.

In addition, as the mop does not contact the inclined surface, contamination of the inclined surface is prevented, thereby preventing generation of odors and propagation of bacteria, and providing an effect that the robot cleaner may smoothly climb the inclined surface.

In addition, by providing a caster entrance ramp in a robot cleaner station, there is an effect of guiding the robot cleaner to be docked at an accurate position when the robot cleaner is docked at the robot cleaner station.

### [Brief Description of Drawings]

FIG. 1 is a perspective view for explaining a cleaner system according to an embodiment of the present disclosure.
FIG. 2 is a perspective view for explaining a state in which a door is opened in a robot cleaner station according to an embodiment of the present disclosure.
FIG. 3 is a front view of FIG. 2.
FIG. 4 is a plan view for explaining a seating unit and a door unit of a robot cleaner station according to an embodiment of the present disclosure.
FIG. 5 is a perspective view for explaining a robot cleaner according to an embodiment of the present disclosure.
FIG. 6 is a side view of FIG. 5.
FIG. 7 is a side view for explaining that a mop of a robot cleaner is spaced apart from a ground according to an embodiment of the present disclosure.
FIG. 8 is a side view for explaining a state in which a mop of a robot cleaner is spaced apart from a ground at a maximum distance according to an embodiment of the present disclosure.
FIG. 9 is a rear view of FIG. 5.
FIG. 10 is a bottom view of FIG. 5.
FIGS. 11A and 11B are views for explaining a process in which a robot cleaner climbs an inclined surface according to an embodiment of the present disclosure.

### DETAILED DESCRIPTION OF SPECIFIC EMBODIMENTS

Hereinafter, preferred embodiments of the present disclosure will be described in detail with reference to the accompanying drawings.

Since the present disclosure may be modified in various ways and may have various embodiments, specific embodiments will be illustrated in the drawings and described in detail in the detailed description. This is not intended to limit the present disclosure to specific embodiments, and should be construed to include all modifications, equivalents, or substitutes included in the spirit and technical scope of the present disclosure.

In describing the present disclosure, terms such as first and second may be used to describe various components, but the components may not be limited by the terms. These terms are used only for the purpose of distinguishing one component from another component. For example, a first component may be named a second component without departing from the scope of rights of the present disclosure, and similarly, a second component may also be named a first component.

The term "and/or" may include a combination of a plurality of related described items or any item among a plurality of related described items.

When a component is referred to as being "connected" or "coupled" to another component, it may be directly connected or coupled to the other component, but it should be understood that other components may exist in between. On the other hand, when a component is referred to as being "directly connected" or "directly coupled" to another component, it may be understood that no other components exist in between.

The terms used in the present application are used only to describe specific embodiments and are not intended to limit the present disclosure. Singular expressions may include plural expressions unless the context clearly dictates otherwise.

In the present application, terms such as "comprise" or "include" are intended to specify that features, numbers, steps, operations, components, parts, or combinations thereof described in the specification exist, and it should be understood that they do not precalculate the possibility of the presence or addition of one or more other features, numbers, steps, operations, components, parts, or combinations thereof.

Unless defined otherwise, all terms used herein, including technical or scientific terms, may have the same meaning as generally understood by those of ordinary skill in the art to which the present disclosure belongs. Terms such as those defined in commonly used dictionaries may be interpreted as having meanings consistent with the meanings in the context of the related art, and may not be interpreted in an ideal or excessively formal sense unless clearly defined in the present application.

In addition, the following embodiments are provided to more completely explain to those with average knowledge in the art, and the shapes and sizes of elements in the drawings may be exaggerated for a clearer explanation.

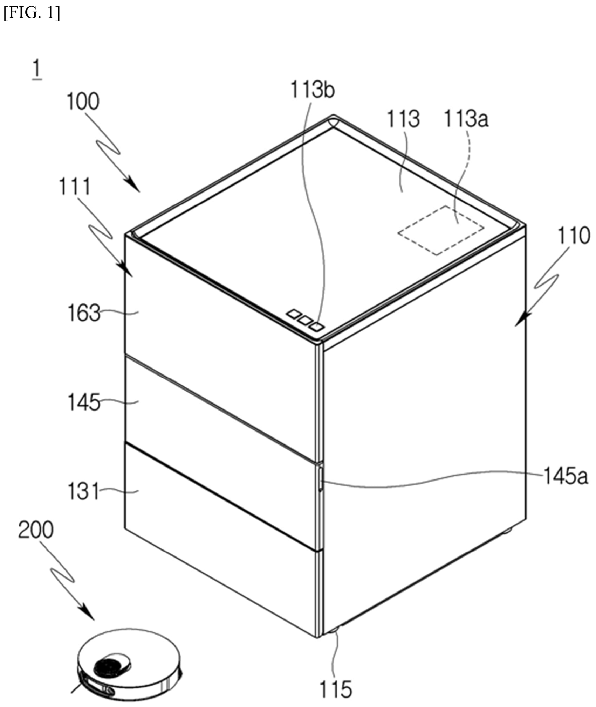

FIG. 1 is a view for explaining a cleaner system according to an embodiment of the present disclosure.

Referring to FIG. 1, a cleaner system 1 according to an embodiment of the present disclosure includes a robot cleaner station 100 and a robot cleaner 200.

The robot cleaner 200 may be seated in the robot cleaner station 100. Specifically, the robot cleaner 200 may enter a front surface of the robot cleaner station 100, and the robot cleaner 200 may be accommodated inside the robot cleaner station 100.

When the robot cleaner 200 enters the inside of the robot cleaner station 100, it may be seated on a base 121 of the robot cleaner station 100. In this case, the robot cleaner 200 and the robot cleaner station 100 may be electrically and fluidly docked. Specifically, a dust bin 220 of the robot cleaner 200 may be fluidly connected to a dust collection unit 150 of the robot cleaner station 100. Also, a water tank 230 of the robot cleaner 200 may be connected to a water supply nozzle 123c of the robot cleaner station 100. Also, a charging terminal 280 of the robot cleaner 200 may be electrically connected to a power supply terminal 123b of the robot cleaner station 100.

Accordingly, the robot cleaner station 100 may remove dust in the dust bin 220 of the robot cleaner 200. The robot cleaner station 100 may wash a mop 242 of the robot cleaner 200. The robot cleaner station 100 may dry the mop 242 of the robot cleaner 200. The robot cleaner station 100 may supply power to the robot cleaner 200.

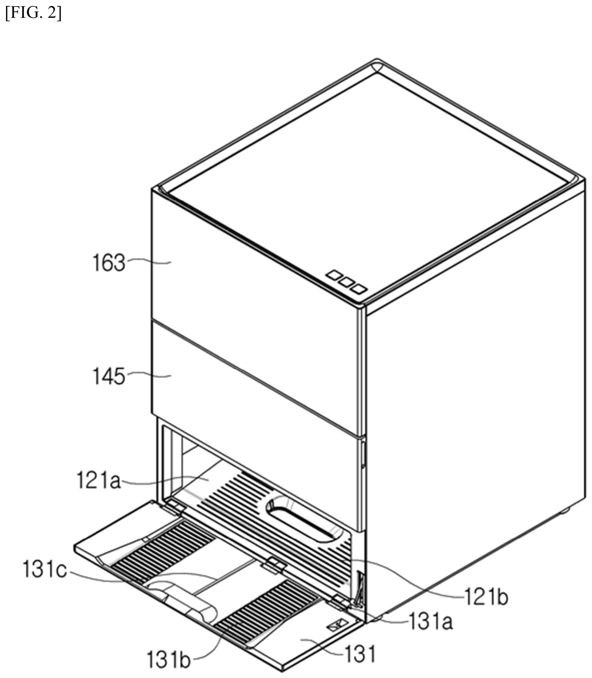

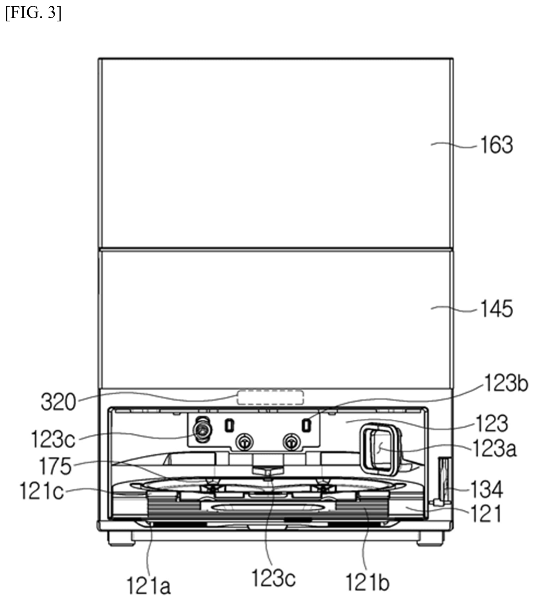

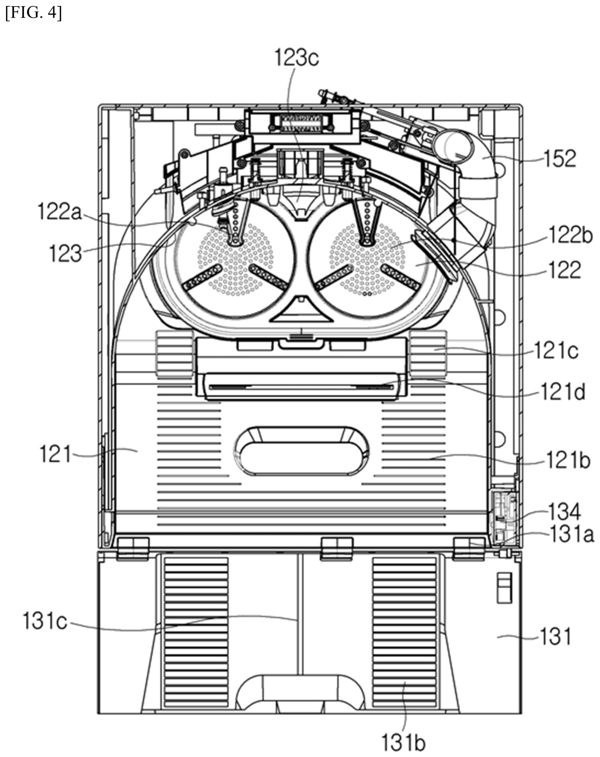

FIG. 2 is a perspective view for explaining a state in which a door is opened in a robot cleaner station according to an embodiment of the present disclosure, FIG. 3 is a front view of FIG. 2, and FIG. 4 is a plan view for explaining a seating unit and a door unit of a robot cleaner station according to an embodiment of the present disclosure.

Referring to FIGS. 2 to 4, the robot cleaner station 100 according to an embodiment of the present disclosure is described as follows.

The robot cleaner 200 may be accommodated in the robot cleaner station 100. The robot cleaner 200 may be seated on a seating unit 120 of the robot cleaner station 100.

The robot cleaner station 100 may include a housing 110.

The housing 110 may form an exterior of the robot cleaner station 100. For example, the housing 110 may be formed in a shape similar to a hexahedron.

The housing 110 may have a space formed therein to accommodate the seating unit 120, a storage unit 140, the dust collection unit 150, a drawer 160, a mop cleaning unit 170, and a mop drying unit 180.

The housing 110 may include a front surface portion 111. The front surface portion 111 may be disposed at a front of the robot cleaner station 100.

Here, the front may mean a direction in which a door 131 is provided based on the inside of the robot cleaner station 100.

Also, the rear may mean a direction opposite to the front based on the inside of the robot cleaner station 100.

Also, based on looking toward the front from the inside of the robot cleaner station 100, the left side may be called a left side, and the right side may be called a right side.

The front surface portion 111 may be generally formed in a shape of a rectangular surface.

An entrance 111a through which the robot cleaner 200 enters and exits may be formed on the front surface portion 111. The drawer 160 may be pulled out from the front surface portion 111. A storage unit cover 145 and a drawer cover 163 may be provided on the front surface portion 111. A space for storing items may be formed on the front surface portion 111.

Accordingly, the front surface portion 111 may have an appearance similar to a chest of drawers.

Also, the robot cleaner 200 may enter the inside of the seating unit 120 by passing through the front surface portion 111. Therefore, according to the present disclosure, there is an effect that an aesthetic sense such as indoor furniture can be provided without exposing the robot cleaner 200 to the outside.

The housing 110 may include a rear surface portion 112. The rear surface portion 112 may be disposed at a rear of the robot cleaner station 100. The rear surface portion 112 may be disposed on an opposite side of the front surface portion 111 based on a dust collection motor 153. The rear surface portion 112 may be formed in a shape corresponding to the shape of the front surface portion 111. For example, the rear surface portion 112 may be formed in a shape of a rectangular surface. An exhaust port 112a may be formed on the rear surface portion 112.

The housing 110 may include an upper surface portion 113. The upper surface portion 113 may cover an upper side of the drawer 160. For example, the upper surface portion 113 may be formed in a shape of a rectangular surface. At this time, the upper surface portion 113 may be formed in a shape in which a border portion protrudes by a predetermined height. That is, the upper surface portion 113 may be formed in a shape having a concave interior. Items may be mounted on an upper side of the upper surface portion 113. Specifically, a charging unit 113a for charging an electronic device may be provided on the upper surface portion 113. Accordingly, when an electronic device is mounted on the upper surface portion 113, the electronic device can be charged.

The housing 110 may include a lower surface portion 114. The lower surface portion 114 may be disposed to face the ground. The lower surface portion 114 may be disposed at a lower side of the base 121 to support the base 121. A plurality of legs 115 may be provided at a lower side of the lower surface portion 114.

The legs 115 may support the lower side of the housing 110. The legs 115 may support the housing 110 by contacting the ground. Accordingly, the lower surface portion 114 may be spaced apart from the ground (the floor of a kitchen) by a predetermined height.

The robot cleaner 200 and the robot cleaner station 100 may be physically, electrically, and/or fluidly connected through the seating unit 120.

The seating unit 120 may be disposed inside the housing 110.

An entrance 127 through which the robot cleaner 200 is introduced may be formed at a front of the seating unit 120. The entrance 127 may mean a space formed on the front surface portion of the robot cleaner station 100.

The entrance 127 may be formed in a size through which the robot cleaner 200 can pass. That is, a height of the entrance 127 is formed to be larger than a height of the robot cleaner 200. At this time, the entrance 127 may mean a space formed upward along a vertical direction from a front end portion of the base 121, which will be described later. Alternatively, the entrance 127 may mean a space formed in a door frame 132, which will be described later, through which the robot cleaner 200 passes.

At this time, the entrance 127 may be opened and closed by the door 131.

The seating unit 120 may include an accommodation space S, the base 121, a docking wall 123, and an inner wall 124.

The robot cleaner 200 may be accommodated in the accommodation space S of the seating unit 120. As an example, the accommodation space S may mean a space surrounded by the base 121, the docking wall 123, and the inner wall 124. As another example, the accommodation space S may mean a space surrounded by the base 121, a cleaning plate 122, the docking wall 123, and the inner wall 124. As another example, the accommodation space S may mean a space where the robot cleaner 200 is located in a state where the robot cleaner 200 is coupled to the power supply terminal 123b, or a space where the robot cleaner 200 is located in a state where the dust bin 220 of the robot cleaner 200 is in communication with a dust passage hole 123a.

The base 121 is a configuration that can support the robot cleaner 200 when the robot cleaner 200 enters the robot cleaner station 100. A wheel 260 of the robot cleaner 200 may contact an upper surface of the base 121. Also, an auxiliary wheel 270 of the robot cleaner 200 may contact the upper surface of the base 121.

The base 121 may include a base body 121a, an inclined portion 121b, a wheel coupling portion 121c, an agitator accommodation portion 121d, and a cleaning tank 128.

The base body 121a may form an overall appearance of the base 121. The inclined portion 121b, the wheel coupling portion 121c, the agitator accommodation portion 121d, and the cleaning tank 128 may be disposed on the base body 121a.

The inclined portion 121b may be disposed at an entrance where the robot cleaner 200 climbs in the base body 121a.

The inclined portion 121b may have an upward slope toward the front in a direction in which the robot cleaner 200 enters. More specifically, the inclined portion 121b is connected such that a front side end portion has no difference in height from the lower surface portion 114, but may have a slope that increases toward the rear. That is, the inclined portion 121b may be formed to gradually rise when the robot cleaner 200 enters.

The wheel 260 of the robot cleaner 200 that has moved upward along the inclined portion 121b may be seated on the wheel coupling portion 121c. When the wheel 260 of the robot cleaner 200 is seated on the wheel coupling portion 121c, physical coupling between the robot cleaner 200 and the robot cleaner station 100 can be achieved. A surface of the wheel coupling portion 121c may be formed to correspond to a surface of the wheel 260 so that the robot cleaner 200 can stably stop.

The wheel coupling portion 121c may be disposed at a stopping position of left and right wheels 260 of the robot cleaner 200 so that the robot cleaner 200 stops at a correct position. Here, the stopping position of the wheel 260 means a position determined for the robot cleaner 200 to stop in order to couple to the power supply terminal 123b and/or a position determined for the robot cleaner 200 to stop in order for the dust bin 220 of the robot cleaner 200 to communicate with the dust passage hole 123a.

The docking wall 123 is a configuration in which the dust passage hole 123a, the power supply terminal 123b, and the water supply nozzle 123c of the robot cleaner station 100 are disposed. The docking wall 123 can spatially separate the accommodation space S from components of the robot cleaner station 100. The docking wall 123 may extend along a vertical direction from a rear side of the base 121. The docking wall 123 may be formed corresponding to a shape of the robot cleaner 200. For example, when a body 210 of the robot cleaner 200 is in a cylindrical shape, the docking wall 123 may be formed in an arc shape having a predetermined radius. With this configuration, it can surround an outer periphery of the robot cleaner 200 and increase an area that can face an outer side surface of the robot cleaner 200. Also, it can stably support the robot cleaner 200.

The dust passage hole 123a may be formed in the seating unit 120 so that air from the outside of the housing 110 can be introduced into the inside. Specifically, the dust passage hole 123a may be formed on the docking wall 123 so that air from the outside of the housing 110 can be introduced into the inside.

The dust passage hole 123a may communicate with the dust bin 220 of the robot cleaner 200. The dust passage hole 123a may communicate with a dust outlet 221 of the dust bin 220 of the robot cleaner 200. The dust passage hole 123a may be formed in a hole shape corresponding to a shape of the dust bin 220 so that dust in the dust bin 220 is introduced into the dust collection unit 150.

The dust passage hole 123a may be formed to communicate with a dust collection passage unit 152.

The robot cleaner station 100 may include a power supply module that supplies power to the robot cleaner 200. The power supply module includes a power supply module housing and the power supply terminal 123b, and a circuit board and elements for power supply may be mounted in the power supply module housing. And, the power supply terminal 123b may be disposed forward in the power supply module housing and disposed to be exposed on the docking wall 123.

The power supply terminal 123b may supply power to the robot cleaner 200 coupled to the seating unit 120. The power supply terminal 123b may be electrically connected by contacting a charging terminal of the robot cleaner 200. The power supply terminal 123b may be disposed in the seating unit 120. Specifically, the power supply terminal 123b may be disposed on the docking wall 123. The power supply terminal 123b may be electrically connected to the robot cleaner 200 coupled to the docking wall 123. The power supply terminal 123b may supply power to a battery of the robot cleaner 200 coupled to the docking wall 123.

The robot cleaner station 100 may further include the water supply nozzle 123c.

The water supply nozzle 123c may be connected to a supply portion 231 of the water tank 230 of the robot cleaner 200. Specifically, the water supply nozzle 123c may be connected to an inlet of the water tank 230. The water supply nozzle 123c may supply water supplied from a cleaning water tank 171 to a storage space inside the water tank 230 of the robot cleaner 200.

The inner wall 124 may be formed on left and right inner side surfaces of the housing 110. A pair of inner walls 124 may be disposed on left and right sides of the base 121. The inner wall 124 may be connected to both ends of the docking wall 123.

The cleaning plate 122 is a configuration for washing the mop of the robot cleaner 200, and the cleaning plate 122 may be seated in the cleaning tank 128 of the base 121. Also, the cleaning plate 122 may contact the mop 242 in a state where the robot cleaner 200 is seated.

The cleaning plate 122 may be a plate formed to be inclined downward overall toward a central portion.

Specifically, the cleaning plate 122 includes a flow guide surface formed in a curved shape. And, at least one or more passage holes 122b through which fluid can pass may be formed on the flow guide surface. Also, cleaning protrusions 122a may be protrudingly formed on the flow guide surface.

At this time, a pair of cleaning protrusions 122a may be symmetrically formed on the flow guide surface. Specifically, the pair of cleaning protrusions 122a are disposed vertically below a pair of mops 242 of the robot cleaner 200, are disposed to face the pair of mops 242, and may be disposed to be contactable with at least a portion of the pair of mops 242.

And, a plurality of passage holes 122b are formed on the flow guide surface, and may be formed between the pair of cleaning protrusions 122a. For example, a plurality of passage holes 122b are formed including a position having the lowest height from the ground (the floor of a kitchen) among the flow guide surfaces, and may be formed between the pair of cleaning protrusions 122a. Through this, fluid discharged between the pair of cleaning protrusions 122a can be guided to the passage holes 122b and flow.

Meanwhile, the flow guide surface may increase in height from the floor of the kitchen toward the rear from the position where the passage hole 122b is formed. That is, the flow guide surface may increase in height from the floor of the kitchen as it gets closer to an external air discharge portion 181c, which will be described later.

With this configuration, cleaning water and/or air flows along the flow guide surface and can be discharged into a space formed between the cleaning plate 122 and the cleaning tank 128 through the passage hole 122b.

When cleaning water is supplied to the cleaning plate 122 and the mop 242 is rotated, the mop 242 can be washed while rubbing against the cleaning protrusion 122a in a stopped state.

The cleaning tank 128 is a configuration on which the cleaning plate 122 is seated. The cleaning tank 128 may be disposed at a rear side of the base body 121a. The cleaning tank 128 is disposed at a lower side of the cleaning plate 122 and is detachably coupled to the cleaning plate 122. The cleaning tank 128 may be formed to correspond to the cleaning plate 122 so that the cleaning plate 122 can be inserted. Liquid that has passed through the cleaning plate 122 may be introduced into the cleaning tank 128.

The cleaning tank 128 may include a cleaning tank base surface through which fluid that has passed through the cleaning plate 122 flows and a cleaning tank wall protrudingly formed in a vertical direction at an outer periphery of the cleaning tank base surface. At this time, the cleaning tank base surface may decrease in height from the ground (the floor of a kitchen) toward the rear of the robot cleaner station 100. Through this, fluid that has passed through the cleaning plate 122 can be gathered at the rear of the cleaning tank 128 and discharged to the outside through a wastewater suction unit 175, which will be described later.

A door unit 130 may be provided to cover a lower portion of a front end portion of the housing 110.

The door unit 130 includes the door 131. The door 131 may form a front appearance of the robot cleaner station 100 in a state where the entrance 127 is closed. For example, the door 131 may be formed close to a rectangular flat plate shape. A length of the door 131 in a left-right direction may be provided to be greater than or equal to a length of the housing 110 in the left-right direction. With this configuration, there is an effect that the appearance of the robot cleaner station 100 becomes neat.

The door frame 132 may be disposed at a front lower side of the housing 110. The door 131 is coupled to the door frame 132 so as to be openable and closable. Also, the entrance 127 through which the robot cleaner 200 can enter and exit may be formed in the door frame 132.

The door frame 132 may form a front appearance of the robot cleaner station 100 in a state where the door 131 is opened.

In the door 131, a rotation axis 131a is disposed at a lower end of the door frame 132, and when opening the entrance 127, it is disposed parallel to a bottom surface or formed to be inclined downward toward the front so that an end portion is disposed to contact the ground.

The door 131 has a hinge portion and may be rotatably connected to the door frame 132. A plurality of hinge portions may be spaced apart along the rotation axis 131a and may be spaced apart at different intervals.

Also, the door 131 may have an auxiliary entrance ramp 131b on a surface facing the housing 110 when closing the entrance 127. The auxiliary entrance ramp 131b is provided so that the robot cleaner 200 can stably travel to the seating unit 120 or the entrance 127, and may be provided to be inclined upward toward the rear.

Specifically, the auxiliary entrance ramp 131b may be formed in a shape of a groove for stable inclined travel of the robot cleaner 200. In the auxiliary entrance ramp 131b, grooves formed along the left-right direction may be spaced apart at equal intervals in a front-rear direction. Such an auxiliary entrance ramp 131b may be formed such that a width in the left-right direction becomes narrower toward the rear. Therefore, as the wheel 260 of the robot cleaner 200 moves toward the seating unit 120 or the entrance 127, left-right movement is limited and it can be guided to a correct position.

The auxiliary entrance ramp 131b guides the wheel 260 to a wheel guide portion 121ba disposed in the seating unit 120. The auxiliary entrance ramp 131b is provided as a pair and may be disposed at each position continuous with a pair of wheel guide portions 121ba.

An entrance sensor 135 is installed in the door frame 132 to recognize an approach of the robot cleaner 200. The entrance sensor 135 may be disposed at a front of the housing 110 so as to recognize the approach of the robot cleaner 200. For example, the entrance sensor 135 may be an IR sensor.

The entrance sensor 135 may be installed at an upper portion on a front surface of the door frame 132. Through this, a detection range can be maximized. Also, the entrance sensor 135 may be installed at a central portion in the left-right direction of the entrance 127. Through this, an entry direction of the robot cleaner 200 can be guided through communication with the robot cleaner 200.

The door 131 may be rotated by a door driving unit 134. As an example, the door driving unit 134 may include a door driving motor and a driving link portion.

The door driving motor may be disposed inside the housing 110 and may be disposed in an upper space of the door frame 132. Specifically, the door driving motor may be disposed in a storage unit body 141. For example, the door driving motor may be disposed at an upper side of the driving link portion.

Through this, space utilization is improved and accessibility is improved, providing convenience to a user.

The driving link portion is provided to connect between the door driving motor and the door 131 to transmit power. The driving link portion includes at least one or more links to transmit driving force of the door driving motor to the door 131 to rotate the door 131.

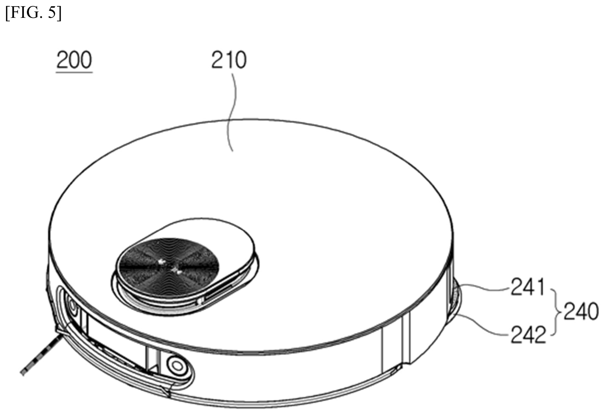

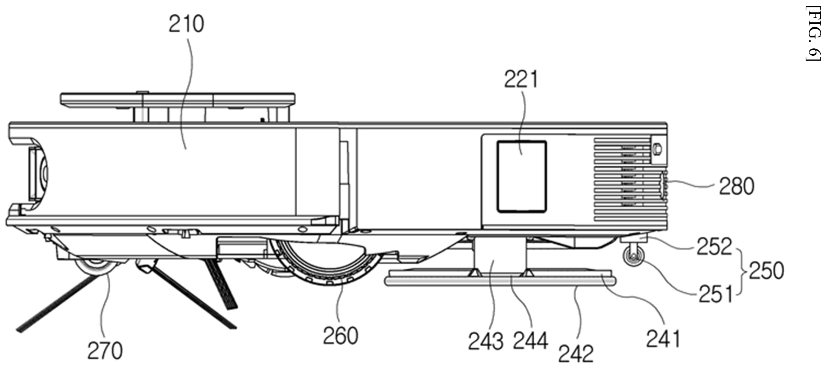

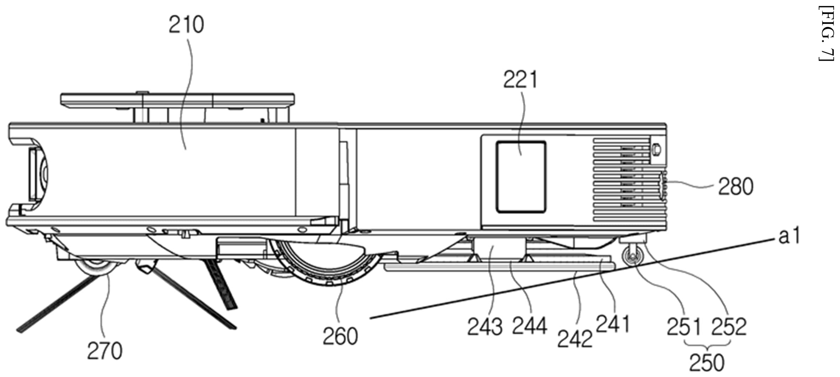

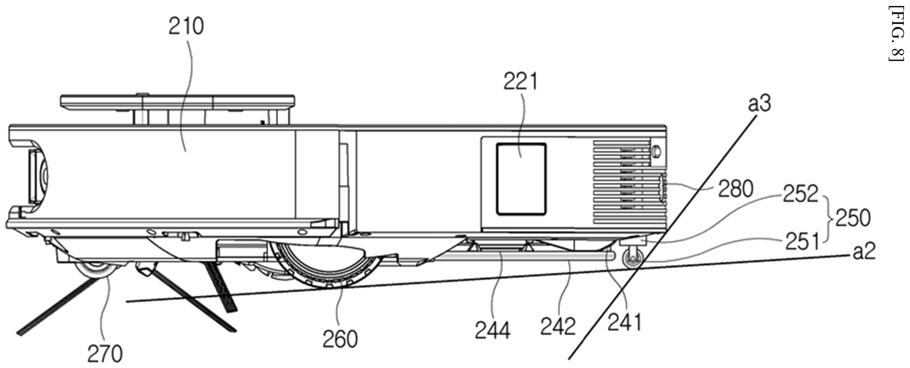

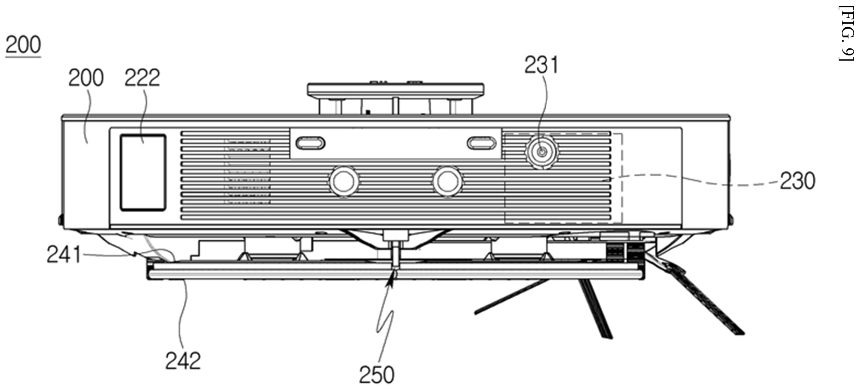

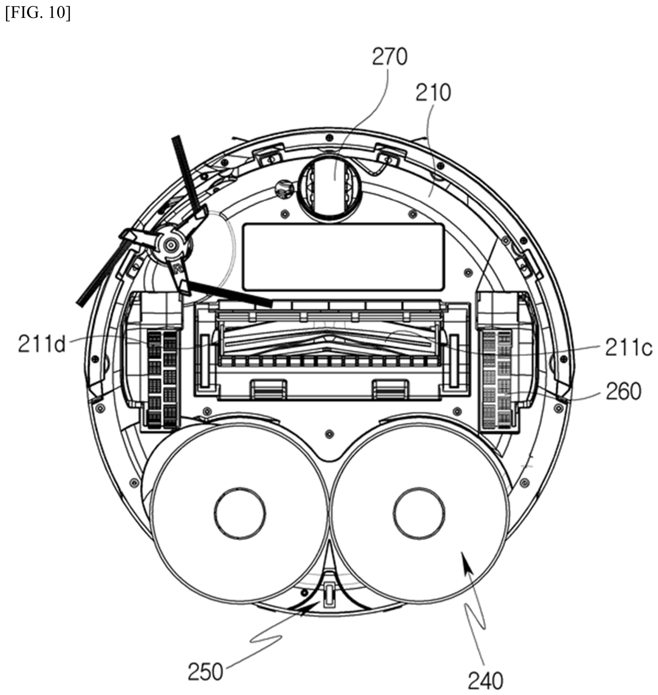

FIG. 5 is a perspective view for explaining a robot cleaner according to an embodiment of the present disclosure, FIG. 6 is a side view of FIG. 5, FIG. 7 is a side view for explaining that a mop of a robot cleaner is spaced apart from a ground according to an embodiment of the present disclosure, FIG. 8 is a side view for explaining a state in which a mop of a robot cleaner is spaced apart from a ground at a maximum distance according to an embodiment of the present disclosure, FIG. 9 is a rear view of FIG. 5, and FIG. 10 is a bottom view of FIG. 5.

Referring to FIGS. 5 to 10, a robot cleaner 200 according to an embodiment of the present disclosure is described as follows.

The robot cleaner 200 may automatically clean an area to be cleaned by sucking foreign substances such as dust from a floor while traveling by itself in the area to be cleaned.

The robot cleaner 200 according to an embodiment of the present disclosure is placed on the floor and is configured to clean the floor while moving along a floor surface. Accordingly, hereinafter, the robot cleaner 200 will be described by defining an up-down direction based on a state in which the robot cleaner 200 is placed on the floor.

And based on a pair of wheels 260, a side where an auxiliary wheel 270, which will be described later, is disposed is defined as a front, and a side where a rotary cleaning unit 240, which will be described later, is disposed is defined as a rear. Additionally, traveling of the robot cleaner 200 in a direction in which the auxiliary wheel 270 is disposed is referred to as moving forward, and traveling of the robot cleaner 200 in a direction in which the rotary cleaning unit 240 is disposed is referred to as moving backward.

"The lowest portion" of each configuration described in the embodiments of the present disclosure may be a portion located lowest in each configuration or a portion closest to the floor when the robot cleaner 200 according to an embodiment of the present disclosure is used by being placed on the floor.

The robot cleaner 200 according to an embodiment of the present disclosure includes a body 210, a dust bin 220, a water tank 230, the rotary cleaning unit 240, an agitator 211c, the wheels 260, the auxiliary wheel 270, and a charging terminal 280.

The body 210 may form an overall appearance of the robot cleaner 200. Each component constituting the robot cleaner 200 may be coupled to the body 210, and some components constituting the robot cleaner 200 may be accommodated inside the body 210.

Specifically, components of the robot cleaner 200 may be provided in an internal space of the body 210. As an example, the body 210 may accommodate a battery and at least one or more motors in the internal space.

In an embodiment of the present disclosure, the body 210 may be formed in a shape in which a width (or diameter) in a horizontal direction is larger than a height in the up-down direction. Such a body 210 helps the robot cleaner 200 form a stable structure and may provide a structure advantageous for avoiding obstacles as the robot cleaner 200 moves (travels).

When viewed from above or below, the body 210 may be formed in various shapes such as a circle, an ellipse, or a rectangle.

The body 210 may be divided into a lower body portion and an upper body portion, and the lower body portion and the upper body portion may be coupled to form a space therein.

The lower body portion may be coupled with the upper body portion to form a space for accommodating the battery, at least one or more sensors, and at least one or more motors therein.

The lower body portion may be formed with a suction unit 211 through which air is introduced and holes for accommodating the pair of wheels 260.

The suction unit 211 may be a passage through which dust on the floor surface is introduced. And the suction unit 211 may communicate with a suction passage (not shown) formed inside the body 210, and the suction passage may communicate with an internal space of the dust bin 220.

Meanwhile, an exhaust passage portion may be further provided in the lower body portion. One side of the exhaust passage portion may communicate with the internal space of the dust bin 220, and the other side may communicate with an exhaust port. At this time, a filter may be disposed in the exhaust port.

With this configuration, air introduced through the suction unit 211 may flow into the dust bin 220 through the suction passage and be discharged to the exhaust port through the exhaust passage portion.

The agitator 211c, which will be described later, may be rotatably accommodated in the suction unit 211. With this configuration, dust around the suction unit 211 may be guided to the inside of the suction unit 211 by rotation of the agitator 211c, and efficiency of sucking dust may be increased.

The upper body portion may form an upper exterior of the robot cleaner 200. Although not shown, a display unit may be provided on the upper body portion.

The robot cleaner 200 of the present disclosure may include a bumper. The bumper is coupled along a border of the body 210 and is configured to move relative to the body 210.

The bumper may be coupled along a portion of the border of the body 210 or may be coupled along the entire border of the body 210. At least one or more elastic members (not shown) may be provided between the bumper and the body 210. With this configuration, when the bumper comes into contact with an obstacle or the like and moves relative to a center of the body 210, the bumper may return to its original position by a restoring force of the elastic member (not shown), and by absorbing or dispersing an impact applied to the bumper, it is possible to prevent and reduce the impact from being transmitted to the body 210.

The dust bin 220 may be provided to suck external dust and air and to store dust.

The dust bin 220 may store dust introduced by passing through the suction passage. The dust bin 220 may be formed with a dust inlet communicating with the suction passage, an internal space for storing dust may be formed, and an air outlet through which air can be discharged may be formed.

The dust bin 220 may be provided inside the body 210. At this time, the dust bin 220 may be fixedly coupled to the body 210 or may be detachably provided according to an embodiment.

Meanwhile, in the present disclosure, a dust discharge passage portion may be formed in the dust bin 220. The dust discharge passage portion may communicate the internal space of the dust bin 220 with an external space of the robot cleaner 200. With this configuration, when dust is collected through the robot cleaner station 100, dust inside the dust bin 220 may be removed.

Meanwhile, a dust outlet 221 communicating with the dust discharge passage portion may be formed in the dust bin 220 according to an embodiment of the present disclosure. As an example, the dust outlet 221 may be formed at a rear side of an outer side surface (or outer peripheral surface) of the body 210. As another example, the dust outlet 221 may be formed on an outer side surface of the dust bin 220.

In addition, the robot cleaner 200 according to an embodiment of the present disclosure may be provided with a dust bin door 222 capable of selectively opening and closing the dust outlet 221. Specifically, the dust bin door 222 is coupled to the body 210 and may be disposed at a position capable of blocking the dust outlet 221. As an example, the dust bin door 222 is formed of a rubber or resin material and is provided so as to be flippable, and one side may be fixedly coupled to the body 210.

With this configuration, when a dust collection motor 153 of the robot cleaner station 100, which will be described later, is operated, the dust bin door 222 is elastically deformed by a driving force of the dust collection motor 153, and as the dust outlet 221 is opened, dust in the dust bin 220 may be collected by a dust collection unit 150 of the robot cleaner station 100.

The water tank 230 is formed in a shape of a container having an internal space so that liquid such as water is stored therein. The water tank 230 is disposed inside the body 210 and may be fixedly coupled to the body 210 or may be detachably coupled from the body 210.

The water tank 230 includes a supply portion 231 and a nozzle (not shown). The supply portion 231 may be provided so that liquid such as water is supplied from the outside. For example, the supply portion 231 is formed with an inlet at the other rear side of the outer side surface (or outer peripheral surface) of the body 210 and may be connected to the storage space inside the water tank 230 through a water supply hose.

At this time, the supply portion 231 may be disposed on an opposite side of the robot cleaner 200 in a left-right direction in relation to the dust outlet 221. For example, if the dust outlet 221 is disposed at a rear left side of the body 210, the supply portion 231 may be disposed at a rear right side of the body 210.

Through such a configuration, in a state where the robot cleaner 200 is coupled to the robot cleaner station 100, the robot cleaner station 100 may simultaneously perform collection of dust and injection of water.

Meanwhile, the nozzle (not shown) is formed in a shape of a tube or a pipe and is connected to the water tank 230 so that liquid inside the water tank 230 can flow through the inside thereof. One side of the nozzle (not shown) is connected to the water tank 230, and the other side end portion is disposed to be located above a pair of rotary plates 241 or at each rotary plate, thereby allowing liquid inside the water tank 230 to be respectively supplied to a pair of mops 242.

That is, the nozzle (not shown) may be formed in a shape in which one pipe is branched into two, and at this time, one branched end portion may be located above a left mop, and the other branched end portion may be located above a right mop.

Meanwhile, although not shown, a pump is provided in the water tank 230 to allow water inside the water tank 230 to flow to the nozzle (not shown). Therefore, when the pump of the water tank 230 is operated, liquid stored in the water tank 230 may be discharged to the rotary cleaning unit 240 through the nozzle (not shown).

The rotary cleaning unit 240 includes the rotary plate 241 and the mop 242.

The rotary plate 241 may be provided as a pair including a left rotary plate and a right rotary plate, and the mop 242 may be provided as a pair including a left mop and a right mop.

The rotary plate 241 may be rotatably disposed on a bottom surface of the body 210, and the mop 242 may be coupled to a lower side thereof.

The rotary plate 241 is formed to have a predetermined area and is formed in a shape such as a flat plate or a flat frame. Such a rotary plate 241 is generally laid horizontally, and accordingly, is formed in a shape in which a width (or diameter) in a horizontal direction is sufficiently larger than a height in the up-down direction. The rotary plate 241 coupled to the body 210 may be parallel to the floor surface or may form a slope with the floor surface. The rotary plate 241 may be formed in a shape of a circular plate, a bottom surface of the rotary plate 241 may generally form a circle, and the rotary plate 241 may be formed in an overall rotationally symmetrical shape.

The pair of rotary plates 241 may be symmetrical to each other.

The mop 242 may be coupled to the lower side of the rotary plate 241 to face the floor.

The mop 242 is formed such that a bottom surface facing the floor has a predetermined area, and the mop 242 is formed in a flat shape. The mop 242 is formed in a shape in which a width (or diameter) in the horizontal direction is sufficiently larger than the height in the up-down direction. When the mop 242 is coupled to the body 210 side, the bottom surface of the mop 242 may be parallel to the floor or may form a slope with the floor.

The bottom surface of the mop 242 may generally form a circle, and the mop 242 may be formed in an overall rotationally symmetrical shape. Also, the mop 242 may be detachably attached to the bottom surface of the rotary plate 241 and may be coupled to the rotary plate 241 to rotate together with the rotary plate 241.

Meanwhile, although not shown, the rotary cleaning unit 240 may be provided with a driving unit that applies a rotational force to the rotary plate 241. For example, the driving unit may include a motor and at least one or more gears. Therefore, when the driving unit is operated, the rotary plate 241 and the mop 242 rotate to wipe and clean the floor surface.

The agitator 211c may be provided with a plurality of brushes so as to be rotatable and guide external dust and air to the dust bin 220. At this time, it is possible for the agitator 211c to be provided with at least one or more gears.

Meanwhile, the agitator 211c according to the present embodiment may be installed with a separate agitator motor (not shown) to receive rotational power, and according to an embodiment, it is also possible to receive rotational power from a travel motor, and it is also possible to receive rotational power from the driving unit of the rotary cleaning unit 240.

The wheel 260 may be provided on the bottom surface of the body 210 and may be connected to a driving unit (not shown). At this time, the driving unit (not shown) may be coupled to the body 210.

The wheel 260 is provided on the body 210 and may roll on the floor.

The wheel 260 may include a first travel wheel and a second travel wheel. At this time, the first travel wheel may be formed identically to the second travel wheel or may be formed symmetrically. As an example, if the first travel wheel is located on the left of the robot cleaner 200, the second travel wheel may be located on the right of the robot cleaner 200, and at this time, the first travel wheel and the second travel wheel may be symmetrical to each other.

The driving unit (not shown) may include a travel motor and a gear. At this time, the travel motor is accommodated inside the body 210 and may provide power to the wheel 260. The travel motor may include a first travel motor and a second travel motor.

The travel motor may be formed of an electric motor. A plurality of gears are configured to rotate in mesh with each other, connect the travel motor and the wheel 260, and transmit rotational power of the travel motor to the wheel 260. Therefore, when a rotation axis of the travel motor rotates, the wheel 260 may rotate.

With this configuration, when the travel motor is operated, the wheel 260 rotates, and the body 210 may travel at a predetermined travel speed on the floor surface.

The auxiliary wheel 270 is provided on a lower side surface of the body 210 and may roll on the floor surface (a surface to be cleaned). The auxiliary wheel 270 may support the body 210 on the floor surface together with the pair of wheels 260. With this configuration, the auxiliary wheel 270 may guide movement of the robot cleaner 200 while minimizing friction between the robot cleaner 200 and the floor surface.

A suction motor (not shown) may generate a suction force capable of sucking external dust and air through the suction unit 211. As an example, the suction motor (not shown) may be an electric motor. External dust and air may be introduced into the suction unit 211 by the suction force generated by the suction motor (not shown), and reach the dust bin 220 after passing through the suction passage.

Although not shown, the battery is coupled to the body 210 and is configured to supply power to other components constituting the robot cleaner 200. The battery may supply power to at least one or more motors provided in the robot cleaner 200. For example, the battery may supply power to motors provided in the rotary cleaning unit 240, the agitator 211c, the wheel 260, and the suction motor (not shown).

Also, the battery may supply power to a sensor unit (not shown) and a control unit (not shown).

The battery may be charged by an external power source, and for this purpose, a charging terminal 280 for charging may be provided on one side of the body 210. For example, the charging terminal 280 may be disposed at a rear side of the outer side surface of the body 210. When the robot cleaner 200 is coupled to the robot cleaner station 100, the charging terminal 280 may contact a power supply terminal 123b of the robot cleaner station 100 to receive power.

Referring to FIGS. 6 to 10, a caster 250 of a robot cleaner 200 according to an embodiment of the present disclosure will be described as follows.

The caster 250 is provided with a caster wheel 251 formed in a wheel shape and may assist the robot cleaner 200 to smoothly climb an inclined surface when the robot cleaner 200 climbs the inclined surface.

The caster 250 may be disposed on a bottom surface of a body 210, and may be disposed in a direction opposite to a direction in which an auxiliary wheel 270 is disposed in a suction unit 211. That is, the caster 250 may be disposed at a rear of the robot cleaner 200.

The caster 250 may be disposed on a virtual center line extending in a front-rear direction of the robot cleaner 200. More specifically, it may be located on a virtual line connecting a point at one-half of a line connecting rotation centers of a pair of rotary plates 241 and a point at one-half of a gap between a pair of wheels.

In addition, the caster 250 may be located on a straight line where the auxiliary wheel 270 contacts a ground.

The caster 250 may be located at a rear end of the robot cleaner 200, and may be located rearward of a rotation center of a rotary cleaning unit 240. More specifically, the caster 250 may be disposed in a space surrounded by an outer peripheral surface of the body 210 and outer peripheral surfaces of a pair of rotary plates 241, which are formed rearward of a point where the pair of rotary plates 241 contact each other.

When the robot cleaner 200 travels to clean the ground, a pair of wheels 260 may contact the ground. At this time, the caster 250 may not contact the ground and may be formed to be spaced apart from the ground.

Accordingly, when the robot cleaner 200 cleans the ground, it does not receive traveling assistance from the caster 250, but when the robot cleaner 200 climbs the inclined surface, the caster 250 contacts the inclined surface to receive climbing travel assistance. Accordingly, the robot cleaner 200 according to an embodiment of the present disclosure has an effect of smoothly climbing the inclined surface.

In addition, the caster 250 may further include a lifter 252 configured to move the caster wheel 251 in an up-down direction.

For example, the lifter 252 may be a servo motor lifter, an electromagnet lifter, a cam-based lifter, a pneumatic lifter, or an electric screw lifter. However, it is not limited thereto.

By providing the lifter 252 in the caster 250, there is an effect that the robot cleaner 200 can smoothly climb the inclined surface by adjusting a height of the caster 250 according to an angle formed by the inclined surface.

Meanwhile, when a pair of wheels 260 climb the inclined surface in a direction toward the caster 250, rolling directions of the caster and the auxiliary wheel 270 may be located on a straight line. That is, a path in which the caster 250 contacts the inclined surface may be the same as a path in which the auxiliary wheel 270 contacts the inclined surface.

Accordingly, the caster 250 may support a load of the robot cleaner 200 until the pair of wheels 260 contact the inclined surface, and the auxiliary wheel 270 may support the load of the robot cleaner 200 while the pair of wheels 260 are climbing the inclined surface.

Also, when the pair of wheels 260 contact the inclined surface, the caster 250 may be formed to be spaced apart from the inclined surface.

In addition, when the robot cleaner 200 climbs the inclined surface in the direction toward the caster 250, since a point at which the inclined surface and the robot cleaner 200 first contact each other is an outer peripheral surface of the caster wheel 251 of the caster 250, a mop 242 can be prevented from contacting the inclined surface.

The rotary cleaning unit 240 includes a driving unit 243 configured to move the mop 242 up and down, and when the robot cleaner 200 climbs the inclined surface, the driving unit 243 may lift the mop 242 such that the mop 242 is spaced apart from the ground.

Also, when the pair of wheels 260 climb the inclined surface in the direction toward the caster 250, the driving unit 243 may lift the mop 242 such that the mop 242 is spaced further apart from the ground than the caster 250.

For example, the driving unit 243 may lift the mop 242 such that an angle formed between the ground and a virtual line passing through a point located at the rearmost side of the mop 242 and contacting the outer peripheral surface of the caster 250 is smaller than an angle formed by the inclined surface with the ground.

However, the driving unit 243 may position the mop 242 to be located above the caster 250, but since the mop contains moisture, a phenomenon of sagging downward may occur. Therefore, even if the driving unit 243 lifts the mop 242 to be located above the caster 250, the mop 242 in which the sagging phenomenon has occurred due to water may be located lower than the caster 250.

At this time, even if the sagging phenomenon of the mop 242 occurs, the caster 250 may be disposed such that an angle formed between the ground and a virtual line passing through a point located at the rearmost side of the mop 242 and contacting the outer peripheral surface of the caster 250 is smaller than the angle formed by the inclined surface with the ground.

Accordingly, when the robot cleaner 200 climbs the inclined surface by moving backward, it is possible to prevent the mop 242 from contacting the inclined surface and prevent the inclined surface from being contaminated.

Meanwhile, if an angle formed between the ground and a virtual line contacting the outer peripheral surface of the wheel 260 and the outer peripheral surface of the caster 250 from a lower side is larger than the angle formed between the ground and the inclined surface, the caster 250 may not contact the inclined surface, or the caster 250 may be spaced apart from the inclined surface before the pair of wheels 260 contact the inclined surface, which may cause a problem of reduced climbing stability of the robot cleaner 200.

To solve the above problem, in the robot cleaner 200 according to an embodiment of the present disclosure, the angle formed between the ground and the virtual line contacting the outer peripheral surface of the wheel 260 and the outer peripheral surface of the caster 250 from the lower side may be formed to be equal to the angle formed between the ground and the inclined surface or smaller than the angle formed by the inclined surface with the ground.

Also, the rotary cleaning unit 240 includes a shaft 244 configured to rotate the mop 242, and the shaft 244 may be located above the virtual line contacting the outer peripheral surface of the wheel 260 and the outer peripheral surface of the caster 250 from the lower side.

In order not to spoil the aesthetic appearance of the robot cleaner 200, the caster 250 may be disposed as close to the bottom surface of the body 210 as possible so as not to be seen.

However, if the caster 250 becomes closer to the bottom surface of the body 210, a problem may occur in which the outer peripheral surface of the body 210 collides with the inclined surface when climbing the inclined surface due to backward movement of the robot cleaner 200.

Accordingly, the robot cleaner 200 according to an embodiment of the present disclosure may be formed such that an angle formed between the ground and a virtual line contacting the outer peripheral surface of the caster 250 at a point located at the rearmost side of the bottom surface of the body 210 is larger than the angle formed between the inclined surface and the ground.

That is, when the caster 250 is disposed to form such an angle when the robot cleaner climbs the inclined surface by moving backward, the inclined surface and the caster 250 contact each other first, thereby increasing climbing stability of the robot cleaner, preventing the inclined surface and the robot cleaner 200 from colliding, and enabling the robot cleaner 200 to smoothly climb the inclined surface.

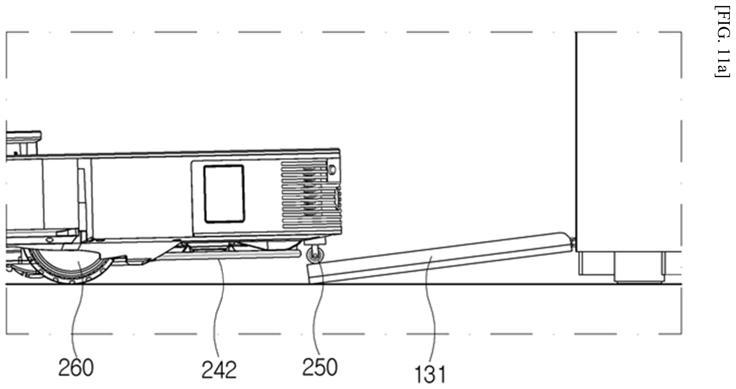

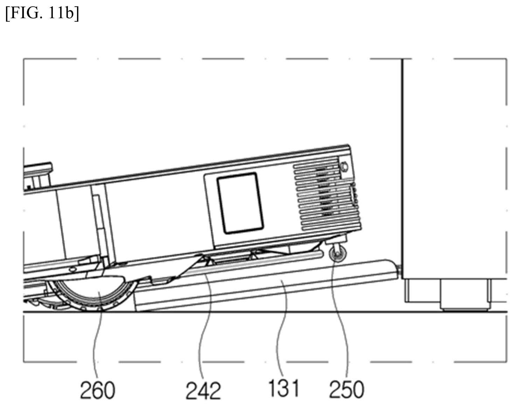

FIGS. 11A and 11B are views for explaining a process in which a robot cleaner climbs an inclined surface according to an embodiment of the present disclosure.

Referring to FIGS. 11A and 11B, a process in which the robot cleaner 200 is docked at the robot cleaner station 100 is described as follows.

First, describing the robot cleaner station 100, when the robot cleaner 200 aligns at a front of the robot cleaner station 100, a rotation axis 131a of a door 131 of the robot cleaner station 100 rotates to be opened.

When the door 131 is opened, a front end of the door 131 contacts the ground, and the door 131 may form an inclined surface formed to be inclined upward toward an entrance 127. At this time, an inclination angle of the inclined surface may be 5 to 15 degrees. For example, the inclination angle of the inclined surface may be 9.3 degrees, but is not limited thereto.

The inclined surface may further include a caster entrance ramp 131c on which the robot cleaner 200 may climb and which guides movement of the caster 250.

The caster entrance ramp 131c may be formed in a shape of a groove in which a wheel can be seated, and may be formed to extend in a direction in which the caster 250 moves. At this time, a length of the caster entrance ramp 131c may be equal to or shorter than a vertical width of the door 131.

When the door 131 is opened and the inclined surface is formed as described above, the robot cleaner 200 may climb the inclined surface by moving backward in the direction toward the caster 250. At this time, the driving unit 243 of the rotary cleaning unit 240 may lift the mop 242 to a maximum spacing distance from the ground.

When the robot cleaner 200 moves by moving backward, the caster 250 contacts the front end of the door 131 and then moves along the caster entrance ramp 131c. During climbing, the caster 250 supports the robot cleaner 200 to improve climbing safety of the robot cleaner 200 and can guide the robot cleaner 200 to be docked at a correct position.

Accordingly, in a process of the robot cleaner 200 climbing the inclined surface, the mop 242 can be prevented from contacting the inclined surface of the door 131, and hygiene can be improved by preventing the inclined surface of the door 131 from being contaminated.

During the climbing process, when the pair of wheels 260 contact the front end of the door 131, the caster 250 may be spaced apart from the door 131. Thereafter, the pair of wheels 260 may climb the inclined surface along an auxiliary entrance ramp 131b.

The robot cleaner 200 that has climbed the inclined surface may be seated on a seating unit 120 through the entrance 127. At this time, a caster groove 123c in which the caster 250 can be seated may be formed in a docking wall 123 of the robot cleaner station 100.

The caster groove 123c may be formed to correspond to the outer peripheral surface of the caster 250. For example, the caster groove 123c may be in a shape of an elliptical concave groove.

Accordingly, when the robot cleaner 200 is completely introduced into the inside of the robot cleaner station 100, the caster 250 may be seated in the caster groove 123c.

Although the present disclosure has been described in detail through specific embodiments, this is for specifically explaining the present disclosure, and the present disclosure is not limited thereto. It is clear that modifications or improvements can be made by those of ordinary skill in the art within the technical spirit of the present disclosure.

All simple modifications or changes of the present disclosure belong to the scope of the present disclosure, and the specific scope of protection of the present disclosure will be made clear by the appended claims.

### [Description of Reference Numerals]

100: robot cleaner station
110: housing
120: seating unit
121: base
122: cleaning plate
123: docking wall
123a: dust passage hole
123b: power supply terminal
123c: caster groove
124: inner wall
127: entrance
128: cleaning tank
130: door unit
131: door
131a: rotation axis
131b: auxiliary entrance ramp
131c: caster entrance ramp
132: door frame
134: door driving unit
135: entrance sensor
200: robot cleaner
210: body
211: suction unit
211a: dust outlet
211b: suction passage portion
211c: agitator
211d: suction port
212: body upper cover
220: dust collection unit
230: water tank
231: supply portion
240: rotary cleaning unit
241: rotary plate
242: mop
243: driving unit
244: shaft
250: caster
251: caster wheel
252: lifter
260: wheel
270: auxiliary wheel
280: charging terminal
290: suction motor

## Claims

1. A robot cleaner (200) comprising:
a body (210) provided with a pair of wheels (260) on a bottom surface thereof;
a suction unit (211) disposed between the pair of wheels (260);
an auxiliary wheel (270) disposed on one side of the suction unit (211); **characterized in that**
a caster (250) disposed in a direction opposite to a direction in which the auxiliary wheel (270) is disposed relative to the suction unit (211); and
a rotary cleaning unit (240) to which at least one or more mops (242) are coupled, wherein a rotation center of the rotary cleaning unit (240) is disposed between the caster (250) and the suction unit (211).

2. The robot cleaner (200) of claim 1,
wherein, when the pair of wheels (260) climb an inclined surface in a direction toward the caster (250), rolling directions of the caster (250) and the auxiliary wheel (270) are located on a straight line.

3. The robot cleaner (200) of claim 1,
wherein the caster (250) is located closer to a ground than the mop (242) when the pair of wheels (260) climb an inclined surface in a direction toward the caster (250).

4. The robot cleaner (200) of claim 1,
wherein the rotary cleaning unit (240) comprises a driving unit (243) configured to move the mop (242) up and down, and wherein the driving unit (243) is configured to lift the mop (242) to be spaced apart from a ground when the pair of wheels (260) move in a direction toward the caster (250) toward an inclined surface.

5. The robot cleaner (200) of claim 1,
wherein an angle formed between a ground and a virtual line contacting an outer peripheral surface of the wheel (260) and an outer peripheral surface of the caster (250) from a lower side is equal to or smaller than an angle formed between the ground and an inclined surface.

6. The robot cleaner (200) of claim 1,
wherein the rotary cleaning unit (240) comprises a shaft (244) configured to rotate the mop (242), and
wherein the shaft (244) is located above a virtual line contacting an outer peripheral surface of the wheel (260) and an outer peripheral surface of the caster (250) from a lower side.

7. The robot cleaner (200) of claim 1,
wherein the caster (250) is configured to be spaced apart from an inclined surface when the wheel (260) contacts the inclined surface.

8. The robot cleaner (200) of claim 4,
wherein the driving unit (243) is configured to lift the mop (242) such that an angle formed between a ground and a virtual line passing through a point located at the rearmost side of the mop (242) and contacting an outer peripheral surface of the caster (250) is smaller than an angle formed by an inclined surface with the ground.

9. The robot cleaner (200) of claim 1,
wherein the caster (250) is spaced apart from a ground while the pair of wheels (260) are in contact with the ground.

10. The robot cleaner (200) of claim 1, wherein the caster (250) comprises:
a caster wheel (251); and
a lifter (252) configured to move the caster wheel (251) in an up-down direction.

11. The robot cleaner (200) of claim 1,
wherein, during traveling on an inclined surface, an angle formed between a ground and a virtual line contacting an outer peripheral surface of the caster (250) at a point located at the rearmost side of the bottom surface portion of the body (210) is larger than an angle formed between the inclined surface and the ground.

12. A robot cleaner system comprising a robot cleaner (200) and a robot cleaner station (100) docked with the robot cleaner (200),
wherein the robot cleaner (200) comprises:
a body (210) provided with a wheel (260) on a bottom surface thereof; and
at least one or more rotary cleaning units (240) disposed at a lower side of the body (210), to which a mop (242) is capable of being coupled;
wherein the robot cleaner station (100) comprises:
a seating unit (120) in which the robot cleaner (200) is accommodated; and
a door unit (130) configured to open and close an entrance (127) through which the robot cleaner (200) enters and exits the seating unit (120),
**characterized in that**
the robot cleaner (200) further comprises a caster (250) disposed at the lower side of the body (210) and disposed rearward of the rotary cleaning unit (240);
wherein the door unit (130) comprises an inclined surface on which the robot cleaner (200) climbs when the entrance (127) is opened; and
wherein the caster (250) is configured to assist in preventing the mop (242) from contacting the inclined surface when climbing the inclined surface.

13. The robot cleaner system of claim 12,
wherein the robot cleaner station (100) comprises a caster entrance ramp (131c) formed to be recessed in the inclined surface and configured to guide movement of the caster (250).

14. The robot cleaner system of claim 12,
wherein the robot cleaner station (100) comprises a docking wall (123) electrically and fluidly connected to the robot cleaner (200), and
wherein the docking wall (123) comprises a caster groove (123c) in which the caster (250) is seated.

15. The robot cleaner system of claim 12,
wherein an angle formed between a ground and a virtual line contacting an outer peripheral surface of the wheel (260) and an outer peripheral surface of the caster (250) from a lower side is equal to or smaller than an angle formed between the ground and the inclined surface.
